# EUROPÄISCHE PATENTANMELDUNG

(11) **EP 2 947 735 A2**
(43) Veröffentlichungstag der Anmeldung: **25.11.2015**
(21) Anmeldenummer: 15168464.4
(22) Anmeldetag: 20.05.2015
(51) Int. Cl.: H02G 3/32

(54) **INSTALLATIONSSYSTEM**

(30) Priorität: 23.05.2014 DE 202014004320 U; 21.08.2014 DE 202014006817 U
(71) Anmelder: Pöttinger Installations GmbH & Co. KG, 4710 Grieskirchen (AT)
(72) Erfinder: Doppelbauer, Martin, 4730 Waizenkirchen (AT); Osterkorn, Thomas, 4084 St. Agatha (AT)
(74) Vertreter: Thoma, Michael

(57) **Zusammenfassung**

Die vorliegende Erfindung betrifft ein Installationssystem zum Verlegen von Energie- und/oder Signalleitungen in Wänden, mit einer Installationsplatte, an der zumindest ein Leerrohr zum Einziehen von Energie- und/oder Signalleitungen sowie zumindest eine mit dem Leerrohr verbundene Leerdose zum Einbau eines Schalters und/oder Anschlussterminals und/oder Steuerungselements vormontiert sind. Erfindungsgemäß bildet die Installationsplatte ein Wand-, Boden- oder Deckenelement, das zumindest vorder- oder oberflächenseitig bündig in eine Wandaussparung einsetzbar und im Bereich der Wandaussparung die Wand bildet, wobei die Installationsplatte mit Ausnahme der zumindest einen Leerdose eine im Wesentlichen geschlossene, ebenmäßige bzw. glatte oder harmonische Vorderseite besitzt, so dass nach Einsetzen in die Wandaussparung ein im Wesentlichen geschlossener Wandabschnitt gebildet ist.

## Beschreibung

Die vorliegende Erfindung betrifft ein Installationssystem zum Verlegen von Energie- und/oder Signalleitungen in Wänden, mit einer Installationsplatte, an der zumindest ein Leerrohr zum Einziehen von Energie- und/oder Signalleitungen sowie zumindest eine mit dem Leerrohr verbundene Leerdose zum Einbau eines Schalters und/oder Anschlussterminals und/oder Steuerungselements vormontiert sind.

Die Installation von Energie- bzw. Signalleitungen wie beispielsweise Stromleitungen, Telefonleitungen, Internetleitungen, aber auch anderen Kabeln oder Energieleitungen der Gebäudetechnik erfolgt vorteilhafterweise mittels Leerrohren, die unter Putz verlegt werden und mit Leerdosen in Verbindung stehen, in denen dann die jeweils passenden Installationsbaugruppenelemente montiert werden können. In den Leerrohren können die benötigten Leitungen oder Kabel eingezogen werden, so dass sie an den Leerdosen mit den genannten Installationsbaugruppen wie beispielsweise einer Steckdose, einer Telefon- oder Internetanschlussdose oder einem Lichtschalter oder einem Temperaturfühler oder einem Leuchtelement beispielsweise in Form eines LED-Strahlers oder einem Audioelement beispielsweise in Form eines Mikrofons oder dergleichen verbunden werden können. Die Verwendung solcher Leerrohrsysteme verbunden mit Leerdosen ermöglicht an sich auch nachträglich eine Variation und Anpassung der verlegten Leitungen und Kabel und Positionierung der Anschlussterminals am benötigten Platz, wobei beispielsweise zusätzlich eine Datenleitung eingezogen und anstelle einer nicht benötigten Steckdose ein Datenkabelanschluss montiert werden kann. Allerdings ist die Installation der Leerrohre selbst sowie der damit verbundenen Leerdosen bislang recht aufwändig und unflexibel. Üblicherweise werden schlitzförmige Leerrohrkanäle in das Mauerwerk geschlagen oder bei Betongusswänden auch schon durch Schalungselemente eingebracht, die dann nach Verlegen der Leerrohre und Leerdosen zugeputzt werden müssen. Dabei muss für jede zu setzende Leerdose das Aufrissmaß eingemessen und bei der Montage berücksichtigt werden. Nachträgliche Änderungen nach dem Erstellen von Betonwänden sind kaum möglich bzw. muss hierzu erst wieder ein Mauerschlitz eingeschlagen bzw. ausgefräst werden.

Im Stand der Technik wurden bereits Montagesysteme für Energie- und Signalleitungen vorgeschlagen, bei denen anstelle eingeputzter Leerrohre Kabelschächte auf das Mauerwerk aufgesetzt werden bzw. in Mauerwerksaussparungen eingebracht werden. Die Schrift DE 195 34 458 A1 sieht zum Verlegen von elektrischen Leitungen und Heizungsrohrleitungen eine kastenförmige Sockelleiste vor, die aus zwei strangpressprofilartigen Halbschalen zusammensetzbar ist. In eine Sockelaussparung über dem Fußboden wird eine im Querschnitt C-förmige Schachtleiste eingebracht, die selbst als Aufnahmeschacht für eine Leitung dient und an die als Deckel eine wiederum strangpressprofilartige Schachtleiste aufgeklipst werden kann, die über Putz liegt und in drei weitere Kammern unterteilt ist, in denen wiederum Leitungen aufgenommen werden können. Eine solche Sockelleiste mit Leitungs-Aufnahmekammern ist allerdings schon aus optischen Gründen nur im Sockelbereich verwendbar. Höher liegende Installationselemente wie Lichtschalter können hierdurch nicht montiert werden. Zudem verhindert das Auftragsmaß über Putz ein bündiges Zustellen von Möbeln wie beispielsweise Schränken oder Sideboards an die Wand.

Ferner ist aus der Schrift DE 23 12 849 A1 eine Installationsbaugruppe für Fertighauswände bekannt, bei der ein Energiekanal in Aussparungen der Wandelemente vorgesehen wird. Die Energiekanäle sollen dabei bereits komplett vormontiert sein und bereits die Leitungen aufweisen, an denen Steckverbinder angebracht sind, um beim Aneinandersetzen mehrerer Energiekanäle die Leitungen verbinden bzw. an Abzweigungsstellen entsprechende Abzweigungskabel anschließen zu können. Die Energiekanäle mit den vormontierten Leitungen sollen bereits vor Verlegung voll funktionsfähige, geprüfte Baugruppen bilden, die ein nachträgliches Einziehen der Leitungen vermeiden. Dies ist allerdings bei klassischen Architektenhäusern mit vor Ort gemauerten oder betongegossenen Wänden schwierig, da hier oft auch nach Erstellung des Rohbaus Anpassungswünsche bezüglich der Positionierung und Anordnung der Energie- und Signalleitungen und der damit verbundenen Terminals bestehen. Zudem lösen die als Energiekanal vorgesehenen U-förmigen Profilschienen gemäß DE 23 12 849 bei solchen Architektenhäusern nicht das Problem, dass nachträglich die Mauerschlitze, in denen die Leitungen verlegt werden, zugeputzt werden müssen.

Der vorliegenden Erfindung liegt daher die Aufgabe zugrunde, ein verbessertes Installationssystem der eingangs genannten Art zu schaffen, das Nachteile des Standes der Technik vermeidet und Letzteren in vorteilhafter Weise weiterbildet. Insbesondere soll eine einfache Leitungsverlegung und Anschlussterminalmontage auch in vor Ort gemauerten Architektenhäusern ermöglicht werden, ohne Mauerschlitze zuputzen zu müssen und für jedes Anschlussterminal Aufrissmaße einmessen zu müssen.

Erfindungsgemäß wird die genannte Aufgabe durch ein Installationssystem gemäß Anspruch 1 gelöst. Bevorzugte Ausgestaltungen der Erfindung sind Gegenstand der abhängigen Ansprüche.

Es wird also vorgeschlagen, die Installationsplatte, an der ein oder mehrere Leerrohre sowie damit verbunden ein oder mehrere Leerdosen vormontiert sind, als Wandelement auszubilden, das eine glatte Wandoberfläche bildet, die den Wandoberflächen benachbarter Mauerwerks- oder Gussbetonwandabschnitten entspricht. Die Ausbildung der Installationsplatte als Wandelement macht ein nachträgliches Zuputzen von Mauerschlitzen oder Gussbetonwandausnehmungen obsolet. Erfindungsgemäß bildet die Installationsplatte ein Wandelement, das zumindest vorder- oder oberflächenseitig bündig in eine Wandaussparung einsetzbar und im Bereich der Wandaussparung die Wand bildet, wobei die Installationsplatte mit Ausnahme der zumindest einen Leerdose eine im Wesentlichen geschlossene, ebenmäßige bzw. glatte oder harmonische Vorderseite besitzt, so dass nach Einsetzen in die Wandaussparung ein im Wesentlichen geschlossener Wandabschnitt gebildet ist. Die in die Wandaussparung eingesetzte Installationsplatte kann natürlich zusammen mit den an die Wandausnehmung angrenzenden Wandabschnitten beispielsweise mit Feinputz verputzt werden oder übertapeziert werden, ein Zuputzen der Wandausnehmung wie bei Wandschlitzen, in die Leerrohre gelegt werden, ist jedoch nicht notwendig.

Die als Wandelement ausgebildete Installationsplatte kann grundsätzlich aus verschiedenen Materialien gefertigt sein, beispielsweise in Sandwich-Konstruktionen mehrlagig aufgebaut sein. In vorteilhafter Weiterbildung der Erfindung jedoch ist die Installationsplatte in Form einer Schaumstoffplatte ausgebildet, beispielsweise als Polystyrolschaumplatte wie sie beispielsweise unter dem Namen Styroporplatten bekannt sind. Andere Schaumstoffe beispielsweise mit speziellen Brandschutzeigenschaften oder Dämmeigenschaften oder feuchtigkeitsabweisenden Eigenschaften können verwendet werden. Durch Ausbildung der Installationsplatte als Schaumstoffplatte kann diese in einfacher Weise vorkonfiguriert und an verschiedene Installationswünsche angepasst werden, beispielsweise können Leerdosen schnell und einfach durch Aussägen, Ausfräsen oder In-anderer-Weise-Ausbilden von Leerdosenaussparungen vormontiert werden. Ebenso können einfach zusätzliche Leerrohre angebracht werden, um zusätzliche Leitungen oder Kabel einziehen zu können.

Ebenso einfach kann eine solche Schaumstoffplatte auf das benötigte Maß zurechtgeschnitten bzw. -gesägt werden, um passgenau in die entsprechende Wandaussparung eingesetzt werden zu können.

Die Leerrohre können vorteilhafterweise im Inneren der Installationsplatte aufgenommen sein, beispielsweise in entsprechenden Leerrohr-Aufnahmekanälen, die gänzlich im Inneren der Installationsplatte verlaufen oder vorteilhafterweise auch in Form von schlitzförmigen Nuten ausgebildet sein können, die zur Rückseite der Installationsplatte offen sein können. Je nach Dicke und/oder Konturierung der Rückseite der Installationsplatte können die Leerrohre auch freiliegend auf der Rückseite der Installationsplatte angeordnet sein, so dass die Leerrohre im montierten Zustand der Installationsplatte in einem Hohlraum zwischen der Rückseite der Installationsplatte und dem Boden der Wandaussparung verlaufen können. Hierzu kann die Installationsplatte beispielsweise randseitig Auflagestege umfassen und/oder es kann in der Wandaussparung beispielsweise randseitig eine Aufstandsleiste für die Rückseite der Installationsplatte angebracht sein, um die Rückseite der Installationsplatte ein Stück weit vom Boden der Wandausnehmung beabstandet zu montieren, so dass sich ein entsprechender Hohlraum bildet, in denen die Leerrohre verlaufen können.

Die Dicke der Installationsplatte kann grundsätzlich unterschiedlich bemessen sein, wobei je nach Material vorteilhafterweise eine ausreichende Plattenstärke vorgesehen ist, die der Installationsplatte eine Formstabilität gibt. In vorteilhafter Weiterbildung der Erfindung kann die Plattenstärke im Zentimeter-Bereich liegen und/oder zumindest größer als der Durchmesser der einzubringenden Leerrohre sein. Vorteilhafterweise kann die Wandstärke der Installationsplatte auch zumindest dem Maß der Tiefe der einzusetzenden Leerdosen entsprechen, so dass wannenförmige Aussparungen einbringbar sind, in denen dann die Leerdosen für beispielsweise elektrische Steckdosen, Lichtschalter und dergleichen einsetzbar sind. Grundsätzlich wäre es aber auch denkbar, die Wandstärke der Installationsplatte dünne als die Tiefe solcher Leerdosen zu machen, so dass die Leerdosen dann auf der Rückseite aus der Installationsplatte herausschauen.

In Weiterbildung der Erfindung kann die Dicke der Installationsplatte etwa der Tiefe der Wandaussparung entsprechen. Hierdurch kann in einfacher Weise ein bündiges Einsetzen erreicht werden. Alternativ kann die Dicke der Installationsplatte geringer sein als die Tiefe der Wandaussparung, wobei dann mittels Aufsatzleisten, die an die Rückseite der Installationsplatte und/oder auf den Boden der Wandaussparung montiert werden, die passende Tiefenstellung bzw. das bündige Einsetzen der Installationsplatte erreicht werden kann.

Vorteilhafterweise ist die Installationsplatte als Vollmaterialplatte ausgebildet. Grundsätzlich wären auch beispielsweise Honigwabenstrukturen oder eine dünne Frontplatte mit einer rückseitig angebrachten Fachwerkstruktur denkbar, eine einfache Vollmaterialausbildung ermöglicht jedoch eine einfache Vormontage und bewirkt gleichzeitig eine gute Dämmung, insbesondere in Verbindung mit einem Schaumstoffmaterial.

In vorteilhafter Weiterbildung der Erfindung kann die Wandaussparung bis zum Boden reichen, so dass die einzusetzende Installationsplatte bis zum Boden reicht. Dies ermöglicht in einfacher Weise eine standardmäßige Bemaßung der Position der Leerdosen in der Installationsplatte. Insbesondere können die Leerdosen an der als Wandelement ausgebildeten Installationsplatte in einfacher Weise immer das übliche Metermaß bzw. den üblichen Meterriss berücksichtigen, so dass bei Einsetzen der Installationsplatte in die bodentiefe Wandaussparung die jeweilige Installationsbaugruppe wie Lichtschalter, Datenleitungsanschluss, Steckdose und dergleichen immer in der standardmäßigen, richtigen Höhe zu liegen kommt.

Die genannte Installationsplatte kann dabei in eine Wandaussparung einer vertikalen Wand eingesetzt werden. Alternativ kann die Installationsplatte jedoch auch als trittfestes Bodenelement oder als Deckenelement ausgebildet sein und in eine Wandaussparung im Boden oder in der Decke eingesetzt werden. Der Term Wandaussparung kann im Kontext der vorliegenden Anmeldung insofern nicht nur eine Aussparung in einer vertikalen Wand, sondern auch eine Aussparung in einem Boden oder einer Decke meinen. Bei Montage in einer aufrechten Wandaussparung können die Leerdosen der Aufnahme von Installationsbaugruppen wie Lichtschaltern, Datenleitungsanschlüssen, Steckdosen und dergleichen dienen, während bei einer Verwendung als Deckenelement Beleuchtungs- und/oder Beschallungs- bzw. Audioelemente eingesetzt werden können. Bei einer Verwendung als Bodenelement können beispielsweise Steckdosen oder Lichtelemente wie Strahler oder auch andere Installationsbaugruppen eingesetzt werden.

Die Installationsplatte kann dabei grundsätzlich einstückig ausgebildet sein, wobei das eine Stück hier von seinem Umriss her der vorgenannten Wandaussparung entsprechen kann bzw. hieran angepasst sein kann. Alternativ zu einer solchen einstückigen Ausbildung kann die Installationsplatte jedoch auch aus mehreren Plattenteilen zusammengesetzt sein. Bei einem solchen modularen Aufbau der Installationsplatte können vorkonfigurierte Plattenteile Verwendung finden, aus denen sich an verschiedene Einbausituationen anpassbare Installationsplatten zusammensetzen lassen.

Vorteilhafterweise können die Plattenteile hierbei formschlüssig aneinandersetzbare Anschlussabschnitte besitzen, die im aneinandergesetzten Zustand dem mehrteiligen Plattenmodul Stabilität geben und die Verbindung vorzugsweise biegesteif und/oder kräfteübertragend ausbilden. Insbesondere können die Anschlussstücke in Form von ineinandersteckbaren Steckprofilabschnitten ausgebildet sein, mittels derer sich aneinanderzusetzende Plattenteile ineinanderstecken lassen. Beispielsweise können solche Steckprofilabschnitte nach Art von Nut und Feder ausgebildet sein, wie es beispielsweise bei Parkettplatten bekannt ist.

Die einzelnen Plattenteile können hierbei insbesondere an gegenüberliegenden Endabschnitten zueinander komplementär ausgebildete Steckprofilabschnitte besitzen, so dass die mehreren Plattenteile variabel aneinandersetzbar sind.

Die vorgenannten Leerrohre können bei einer solchen mehrstückigen Ausbildung der Installationsplatte in Leerrohrkanäle oder -nuten eingebracht werden, die über die Plattengrenzen hinweg verlaufen. Alternativ oder zusätzlich zu solchen über mehrere Platten hinweg laufenden Leerrohrkanäle kann zumindest jedoch auch ein Plattenteil einen Leerrohrkanal aufweisen, der nur in diesem einen Plattenteil verläuft.

Alternativ oder zusätzlich zu einer modularen Ausbildung der Installationsplatte selbst kann auch das Leerdosensystem einen modularen, hinsichtlich der Anordnung oder Anzahl der Leerdosen umkonfigurierbaren Aufbau besitzen. Insbesondere kann in Weiterbildung der Erfindung in der Installationsplatte eine an sich überdimensionierte Leerdosenaussparung bzw. eine für mehrere Leerdosen bemessene Leerdosenaussparung vorgesehen sein, an der verschiedene Leerdoseneinfassungen mit unterschiedlichen Anzahlen und/oder unterschiedlichen Anordnungen von Leerdosenöffnungen auswechselbar montiert werden können. Hierdurch können beispielsweise zwei nebeneinander angeordnete Leerdosen ebenso wie zwei übereinander angeordnete Leerdosen oder auch nur eine Leerdose vorgesehen werden, ohne hierfür verschiedene Installationsplatten zu benötigen.

Vorteilhafterweise kann in Weiterbildung der Erfindung eine Leerdoseneinfassung zumindest eine Leerdosenöffnung besitzen und im Wesentlichen bündig mit einem die Leerdosenausnehmung in der Installationsplatte umgebenden Frontwandabschnitt der Installationsplatte ein- oder aufgesetzt werden.

Die genannten Leerdoseneinfassung kann dabei eine flächige, insbesondere eben ausgebildete Frontwand besitzen, die den jeweiligen Frontwandabschnitt der Installationsplatte, der die darin vorgesehene Leerdosenaussparung umgibt, konturmäßig im Wesentlichen stetig bzw. kontinuierlich fortsetzt. Die Frontwand der Leerdoseneinfassung kann dabei einen Teil der Frontwand der Installationsplatte bilden und/oder insbesondere die hinter der Frontwand befindliche Leerdosenausnehmung in der Installationsplatte zumindest teilweise, insbesondere bis auf die Leerdosenöffnung verschließen. Die Leerdoseneinfassung kann die Frontseite der Leerdose und/oder den die Leerdosenöffnung umgebenden Frontwandabschnitt bilden und die genannte Leerdosenöffnung definieren bzw. begrenzen.

In Weiterbildung der Erfindung kann die Leerdoseneinfassung eine von der Innenkontur der Leerdosenöffnung abweichende Außenkontur besitzen. Beispielsweise kann die Außenkontur der Leerdoseneinfassung rechteckig oder mehreckig ausgebildet sein, während die genannte Innenkontur rund bzw. kreisrund ausgebildet sein kann.

In Weiterbildung der Erfindung kann in die Installationsbaugruppe ein Orientierungs- und/oder Ausrichtungsmesselement integriert sein, insbesondere in Form eines Wasserwaagenelements, das die Ausrichtung und/oder Orientierung der Installationsplatte anzeigt, insbesondere eine exakt waagrechte und/oder senkrechte Ausrichtung beim Einbau.

Die Erfindung wird nachfolgend anhand eines bevorzugten Ausführungsbeispiels und zugehöriger Zeichnungen näher erläutert. In den Zeichnungen zeigen:
- Fig. 1:: eine schematische Draufsicht auf eine Installationsplatte nach einem Ausführungsbeispiel der Erfindung, wobei die an einem bodenseitigen Rand der Installationsplatte herausgeführten Leerrohrkanäle und die an der Platte angebrachten Leerdosen zu sehen sind,
- Fig. 2:: einen vertikalen Längsschnitt durch die Installationsplatte aus Fig. 1, der den Verlauf der Leerrohre auf der Rückseite der Platte und deren Anschluss an die Leerdosen zeigt,
- Fig. 3:: eine horizontale Schnittansicht, die die Einbausituation der Installationsplatte in einer Wandaussparung zeigt,
- Fig. 4:: eine perspektive, schematische Gesamtansicht eines Plattenteils einer Installationsplatte, die endseitig Steckprofilabschnitte besitzt, um mit anderen Plattenteilen zusammengesetzt zu werden,
- Fig. 5:: eine perspektivische, schematische Darstellung eines weiteren Plattenteils ähnlich Fig. 4, der jedoch nebeneinander liegende Dosenausnehmungen aufweist,
- Fig. 6:: eine perspektivische, schematische Darstellung eines weiteren Plattenteils mit nur einer Dosenausnehmung und einem zu dieser führenden Leerrohrschacht,
- Fig. 7:: eine perspektivische, schematische Darstellung eines weiteren Plattenteils mit einer für mehrere Leerdosen dimensionierten Leerdosenausnehmung, in die eine mehrere Leerdosenöffnungen definierende Leerdoseneinfassung eingesetzt bzw. aufgesetzt ist, und
- Fig. 8:: eine schematische Seitenansicht eines Schnellbefestigers in Form einer Schraubhülse und eines Schraubelements, deren Schraubkontur abgeflacht ausgebildet ist.

Das in den Figuren gezeigte Installationssystem 1 umfasst eine Installationsplatte 2, die als Vollmaterial-Schaumstoffplatte ausgebildet sein und eine Stärke im Zentimeter-Bereich haben kann. Die Installationsplatte 2 kann vorteilhafterweise eben ausgebildet sein bzw. zumindest eine näherungsweise ebene Vorderseite besitzen und insbesondere eine insgesamt etwa kubische Konturierung besitzen.

In die Installationsplatte 2 sind dabei eine oder mehrere Leerdosen 3 eingesetzt, die topfförmig ausgebildet und zur Vorderseite hin offen sein können, so dass von der Vorderseite her später Anschlussterminals wie elektrische Steckdosen, Datenanschlussdosen, Telefonanschlussstecker, Mikrofone, Leuchtelemente oder Temperaturfühler oder dergleichen anschließbar bzw. einsetzbar sind.

Die genannten Leerdosen 3 können insbesondere in Dosenaussparungen sitzen bzw. eingesetzt sein, die in der Installationsplatte 2 ausgebildet sein können, beispielsweise in Form ausgefräster oder ausgestemmter Ausnehmungswannen oder auch einfach in Form von Durchgangsausnehmungen, die die Leerdosen 3 auch von der Rückseite der Installationsplatte 2 her zugänglich machen.

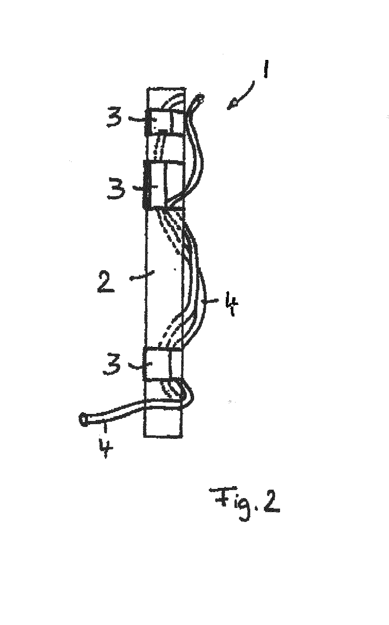

Zusätzlich zu den Leerdosen 3 sind an der Installationsplatte 2 ein oder mehrere Leerrohre 4 vormontiert, die beispielsweise in Form von flexiblen Kunststoffschläuchen, z.B. Rippwandschläuchen, ausgebildet sein können. Die genannten Leerrohre 4 können vorteilhafterweise in einem bodenseitigen Randabschnitt 6 der Installationsplatte 2 durch die Installationsplatte 2 hindurchtreten bzw. zur Vorderseite der Installationsplatte 2 herausgeführt sein. Im Übrigen erstrecken sich die genannten Leerrohre 4 vorteilhafterweise auf der Rückseite der Installationsplatte 2 entweder freiliegend oder in die Rückseite der Installationsplatte 2 eingebrachten Leerrohrnuten. Wie Fig. 2 zeigt, sind die genannten Leerrohre 4 dabei an die Leerdosen 3 angeschlossen bzw. damit verbunden, so dass in die Leerrohre 4 einzuziehende Energie- bzw. Signalleitungen 7 durch die Leerrohre 4 hindurch in die Leerdosen 3 bzw. zu diesen Leerdosen 3 geführt werden können.

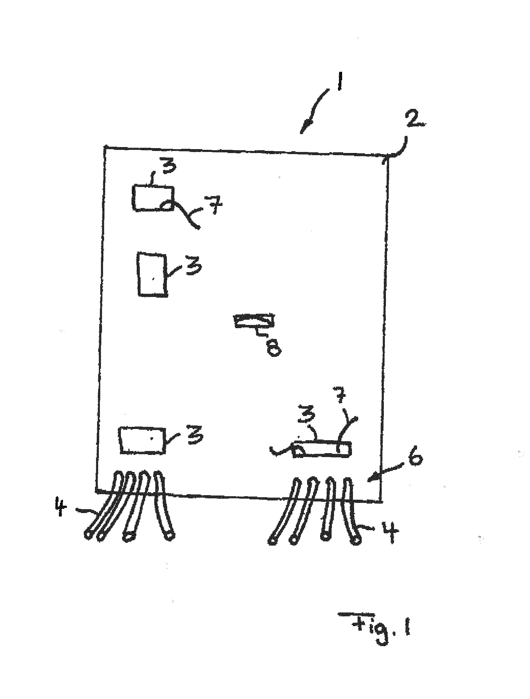

Wie die Figuren 1 und 2 zeigen, können die Leerdosen 3 vorteilhafterweise bündig mit der Vorderseite der Installationsplatte 2 vormontiert sein, so dass dann die üblichen Verblendungen von Anschlussterminals wie beispielsweise Steckdosenblenden aufgesetzt werden können.

Wie Fig. 1 zeigt, kann in die Installationsplatte 2 ein Ausrichtungssensorelement 8 beispielsweise in Form einer Wasserwaage integriert sein, um eine einfache exakte Montage zu ermöglichen.

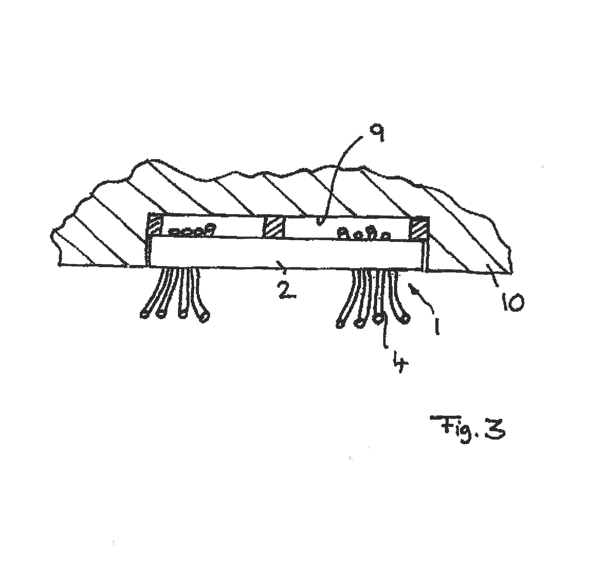

Wie Fig. 3 zeigt, wird die Installationsplatte 2 mit ihrer Vorderseite bündig zu den angrenzenden Wandoberflächen in eine Wandausnehmung 9 eingesetzt. Hierzu kann die Stärke der Installationsplatte im Wesentlichen der Tiefe der Wandausnehmung entsprechen. Alternativ können in die Wandausnehmung, beispielsweise randseitig, Aufstandsleisten montiert werden, wie dies Fig. 3 zeigt bzw. in strichlierter Darstellung andeutet.

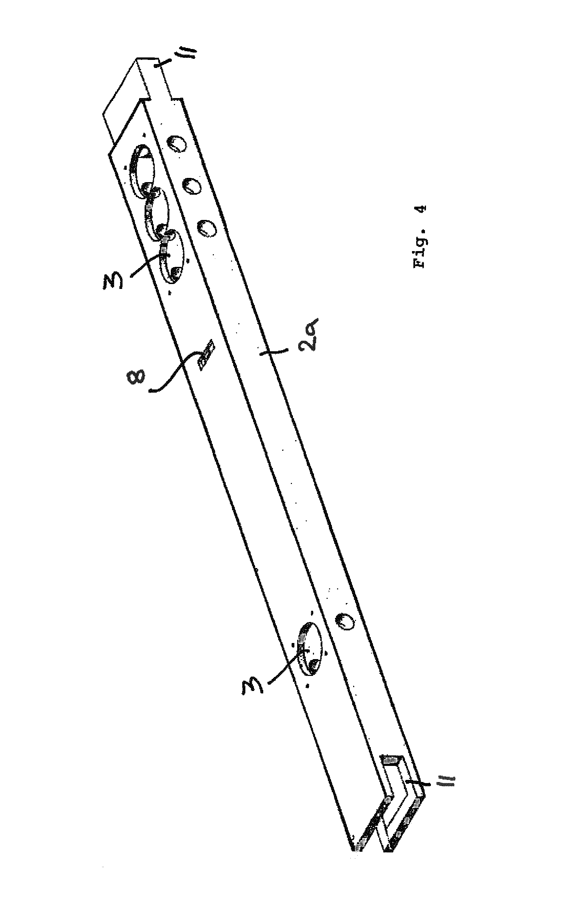

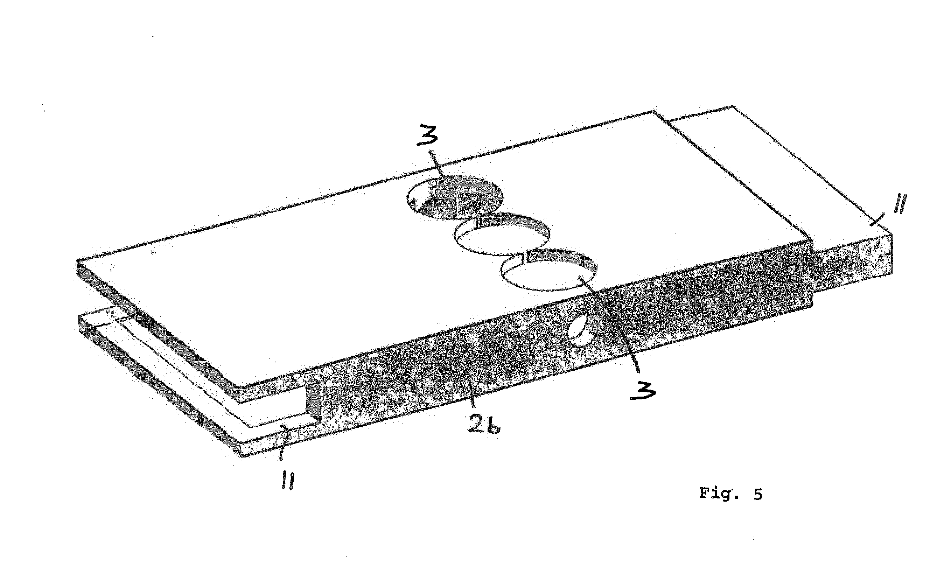

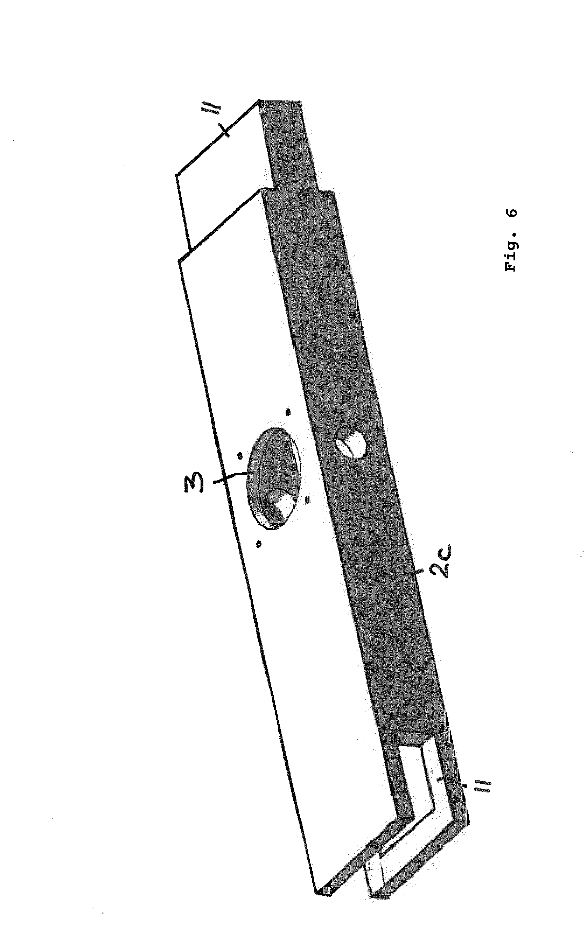

Wie die Figuren 4-6 zeigen, kann die Installationsplatte 2 auch einen modularen Aufbau besitzen und aus mehreren Plattenteilen 2a, 2b und 2c zusammensetzbar sein. Die Plattenteile 2a, 2b und 2c können hierbei vorteilhafterweise jeweils an gegenüberliegenden Endabschnitten zueinander komplementär ausgebildete Steckprofilabschnitte 11 besitzen, die beispielsweise nach Art von Nut und Feder ausgebildet sein können, wie dies vom Prinzip her von Steckparkettplatten bekannt ist.

Die Plattenteile 2a, 2b und 2c können unterschiedliche Anzahlen von Leerrohrkanälen aufweisen und/oder unterschiedliche Anzahlen von Dosenaussparungen besitzen, wobei Letztere auch unterschiedliche Verläufe haben können, beispielsweise vertikal und/oder horizontal bei Berücksichtigung der bestimmungsgemäßen Einbausituation.

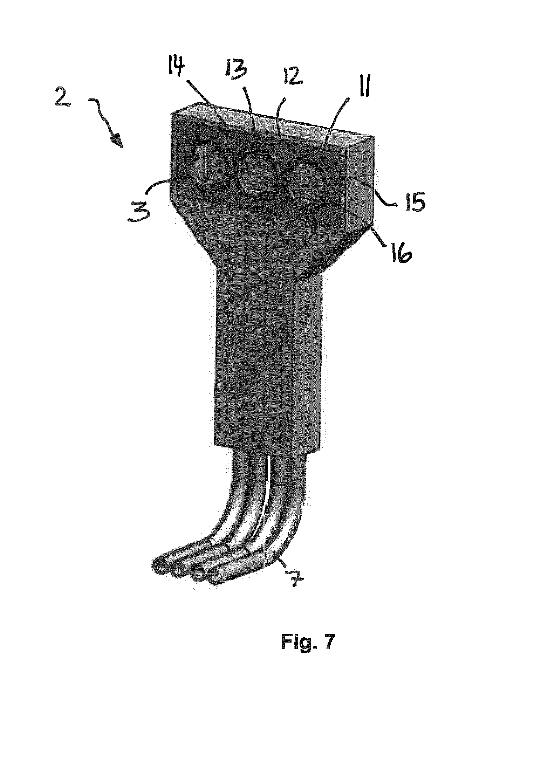

Wie Fig. 7 zeigt, kann die Installationsplatte 2 auch ein modular aufgebautes, umkonfigurierbares Leerdosensystem umfassen. Beispielsweise kann eine für mehrere Leerdosen 3 bemessene Leerdosenausnehmung 11 in einem Plattenelement 2 ausgebildet sein, welche Leerdosenausnehmung 11 durch eine Leerdoseneinfassung 12 ergänzbar ist. Während Fig. 7 eine Leerdoseneinfassung 12 mit drei Leerdosenöffnungen 13 zeigt, können auch andere Leerdoseneinfassungen 12 mit beispielsweise nur zwei oder auch nur einer Leerdosenöffnung eingesetzt oder aufgesetzt werden, so dass durch einfaches Austauschen der genannten Leerdoseneinfassung 12 die Anzahl und Anordnung der Leerdosen 3 umkonfigurierbar ist.

Die genannte Leerdoseneinfassung 12 kann hierbei vorteilhafterweise eine ebene Frontwand 14 umfassen, in der zumindest eine Leerdosenöffnung 13 ausgebildet ist, wobei die genannte Frontwand 14 im Wesentlichen bündig mit der die Leerdosenausnehmung 11 umgebenden vorderseitigen Oberfläche des Plattenelements 2 einsetzbar bzw. aufsetzbar ist.

Wie Fig. 7 zeigt, kann die genannte Leerdoseneinfassung 12 dabei eine rechteckige Außenkontur 15 umfassen, während die Innenkontur 16, die die Leerdosenöffnung 13 definiert, insbesondere kreisrund ausgebildet sein kann. Anstelle der beispielhaft gezeigten Außen- und Innenkonturen 15 und 16 können aber auch andere Konturen vorgesehen sein, die an die jeweils einzubauende Installationsbaugruppe angepasst sein können. Hierdurch lässt sich durch einfachen Austausch der Leerdoseneinfassung 12 die Leerdose 3 an die vorzusehende Installationsbaugruppe anpassen und entsprechend umkonfigurieren.

Wie Fig. 4 zeigt, kann in ein solches Plattenteil 2a auch das schon erwähnte Ausrichtungssensorelement 8 beispielsweise in Form einer Wasserwaage integriert sein.

Mit Hilfe eines solchen modularen Aufbaus der Installationsplatte 2 kann diese in einfacher Weise an unterschiedlich große oder konturierte Wandausnehmungen oder auch an verschiedene Installationselemente-Layouts angepasst werden. Beispielsweise können für Wandaussparungen, in denen fünf Lichtschalter in Reihe gewünscht sind, andere Plattenteile Verwendung finden als für Wandaussparungen, in denen drei Lichtschalter übereinander gewünscht sind.

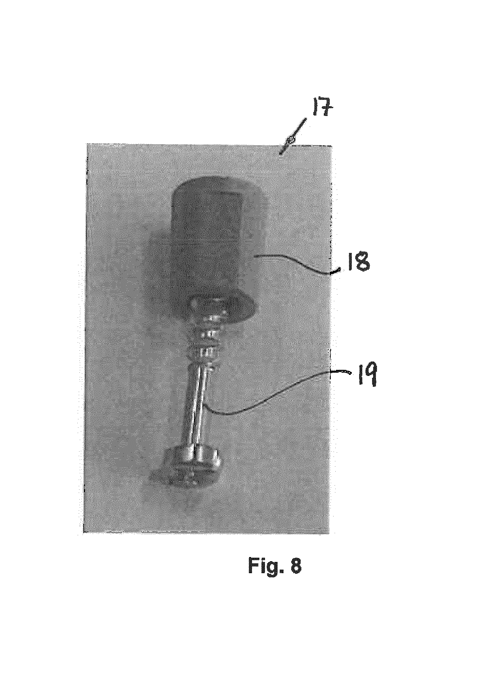

Wie Fig. 8 zeigt, kann an der Installationsplatte 2 zumindest ein Schnellbefestiger 17 vorgesehen sein, mittels dessen sich die Installationsplatte 2 rasch an der Wand 10 bzw. in der Wandausnehmung 9 befestigen lässt. Ein solcher Schnellbefestiger 17 kann vorteilhafterweise eine Hülse 18 und ein darin einsteckbares Schraubelement 19 umfassen. Die genannte Hülse 18 und das Schraubelement 19 können hierbei eine miteinander in Eingriff bringbare Verschraubungskontur beispielsweise in Form eines Schraubgewindes aufweisen, welche Schraubkontur vorteilhafterweise derart ausgebildet sein kann, dass in einer ersten Drehstellung des Schraubelements 19 kein Schraubeingriff zwischen Hülse 18 und Schraubelement 19 vorliegt und dementsprechend das Schraubelement 19 durch die Hülse 18 hindurchrutschen bzw. hindurchgeschoben werden kann. In einer zweiten Schraubstellung kann dann die Schraubkontur greifen, um ein Verschrauben von Hülse 18 und Schraubelement 19 zu gestatten.

Beispielsweise kann die genannte Schraubkontur an der Hülse 18 und/oder an dem Schraubelement 19 an gegenüberliegenden Seiten abgeflacht sein, so dass das Schraubelement 19 über die genannten abgeflachten Seiten durchrutschen kann. Bei einer Drehung um 90° greifen dann die nicht abgeflachten Seiten und gestatten ein Arretieren bzw. Verschrauben.

## Patentansprüche

1. Installationssystem zum Verlegen von Energie- und/oder Signalleitungen (7) in Wänden (10), mit einer Installationsplatte (2), an der zumindest ein Leerrohr (4) zum Einziehen von Energie- und/oder Signalleitungen sowie zumindest eine mit dem genannten Leerrohr (4) verbundene Leerdose (3) zum Einbau zumindest eines Schalters und/oder Anschlussterminals und/oder Steuerungselements vormontiert sind, **dadurch gekennzeichnet, dass** die Installationsplatte (2) ein Wandelement bildet, das bündig in eine Wandaussparung (9) einsetzbar ist und im Bereich der Wandaussparung (9) die Wand bildet, wobei die Installationsplatte (2) mit Ausnahme der zumindest einen Leerdose (3) eine im Wesentlichen geschlossene Vorderseite besitzt, so dass nach Einsetzen in die Wandaussparung (9) ein im Wesentlichen geschlossener Wandabschnitt gebildet ist.

2. Installationssystem nach dem vorhergehenden Anspruch, wobei die Installationsplatte (2) in Form einer Schaumstoffplatte, vorzugsweise Polystyrolschaumplatte, ausgebildet ist.

3. Installationssystem nach einem der vorhergehenden Ansprüche, wobei die Leerrohre (4) im Inneren der Installationsplatte (2) und/oder auf einer Rückseite der Installationsplatte (2) freiliegend angeordnet sind.

4. Installationssystem nach einem der vorhergehenden Ansprüche, wobei die Installationsplatte (2) als Vollmaterialplatte ausgebildet ist.

5. Installationssystem nach einem der vorhergehenden Ansprüche, wobei die Installationsplatte (2) eine Dicke besitzt, die im Wesentlichen der Tiefe der Wandaussparung (9) entspricht.

6. Installationssystem nach einem der Ansprüche 1-4, wobei die Installationsplatte (2) eine Dicke besitzt, die kleiner ist als die Tiefe der Wandaussparung (9), wobei an der Rückseite der Installationsplatte (2) und/oder am Boden der Wandaussparung (9) Aufstandsleisten montiert sind, deren Höhe derart bemessen ist, dass die Installationsplatte (2) bei Aufstehen auf den Aufstandsleisten bündig in die Wandaussparung (9) eingesetzt ist.

7. Installationssystem nach einem der vorhergehenden Ansprüche, wobei die Installationsplatte (2) eine Dicke von zumindest 1 cm besitzt, vorzugsweise eine Dicke von einigen Zentimetern besitzt.

8. Installationssystem nach einem der vorhergehenden Ansprüche, wobei die Leerrohre (4) an Leitungsöffnungen der Leerdosen (3) angeschlossen sind derart, dass Leitungen (7) durch die Leerrohre (4) in die Ausnehmung der Leerdosen (3) führbar sind, wobei die Leerrohre (4) an einem vorzugsweise bodenseitigen Randabschnitt der Installationsplatte (2) durch die Installationsplatte (2) hindurch auf eine Vorderseite der Installationsplatte (2) geführt sind.

9. Installationssystem nach einem der vorhergehenden Ansprüche, wobei die Installationsplatte modular aus mehreren Plattenteilen zusammengesetzt ist, wobei die Plattenteile jeweils zumindest einen Leerrohrkanal besitzen und zumindest ein Leerrohrkanal bei aneinandergesetzten Plattenteilen über die Plattenteilgrenze hinweg verläuft.

10. Installationssystem nach dem vorhergehenden Anspruch, wobei die Plattenteile (2a, 2b, 2c) ineinandersteckbare Steckprofilabschnitte (11) besitzen, wobei vorzugsweise jedes Plattenteil (2a, 2b, 2c) an gegenüberliegenden Enden zueinander komplementäre Steckprofilabschnitte (11) nach Art von Nut und Feder besitzt.

11. Installationssystem nach einem der Ansprüche 1-8, wobei die Installationsplatte (2) einstückig ausgebildet ist.

12. Installationssystem nach einem der vorhergehenden Ansprüche, wobei die Außenabmessungen der Installationsplatte (2) im Wesentlichen den Innenmaßen der Wandaussparung (9) entsprechen, so dass die Installationsplatte (2) im Wesentlichen spaltfrei in die Wandaussparung (9) einsetzbar ist.

13. Installationssystem nach einem der vorhergehenden Ansprüche, wobei an der Installationsplatte (2) ein Ausrichtungs- und/oder Orientierungssensorelement (8), insbesondere in Form eines Wasserwaagenelements, vorgesehen ist.

14. Installationssystem nach einem der vorhergehenden Ansprüche, wobei die zumindest eine Leerdose (3) einen modularen, hinsichtlich der Leerdosenöffnung umkonfigurierbaren Aufbau besitzt und/oder eine in eine Leerdosenaussparung (11) der Installationsplatte ein- oder aufsetzbare Leerdoseneinfassung (12) aufweist, die zumindest eine Leerdosenöffnung (13) besitzt und im Wesentlichen bündig mit einem die genannte Leerdosenausnehmung (11) umgebenden Frontwandabschnitt der Installationsplatte (2) ein- oder aufsetzbar ist, wobei die Leerdoseneinfassung (12) eine flächige, insbesondere ebene, Frontwand (14) besitzt, die den genannten Frontwandabschnitt der Installationsplatte (2) konturmäßig im Wesentlichen gleichmäßig fortsetzt.

15. Installationssystem nach einem der beiden vorhergehenden Ansprüche, wobei die Leerdoseneinfassung (12) eine Außenkontur (15) besitzt, die von der Innenkontur (16) der Leerdosenöffnung (13) abweicht, wobei vorzugsweise die genannte Außenkontur (15) ein mehreckiges Polygon bildet und die genannte Innenkontur (16) rund, insbesondere kreisförmig ausgebildet ist und wobei die Leerdosenausnehmung (11) in der Installationsplatte (2) für mehrere Leerdosen (3) bemessen ist und verschiedene Leerdoseneinfassungen (12) mit unterschiedlichen Anzahlen von Leerdosenöffnungen (13) auswechselbar ein- oder aufsetzbar sind.

16. Installationssystem nach einem der vorhergehenden Ansprüche, wobei an der Installationsplatte (2) zumindest ein Schnellbefestiger (17) zum Schnellbefestigen an der Wand (10) vorgesehen ist, wobei der Schnellbefestiger (17) eine Hülse (18) und ein sich durch die Hülse (18) hindurchstreckendes Schraubelement (19) umfasst, wobei die Hülse (18) und das Schraubelement (19) mit einer Verschraubungskontur (20) versehen sind, die in einer ersten Drehstellung des Schraubelements (19) relativ zur Hülse (18) außer Eingriff ist, so dass das Schraubelement (19) axial durch die Hülse (18) hindurchschiebbar ist, und in einer zweiten Drehstellung des Schraubelements (19) relativ zur Hülse (18) in Eingriff ist, so dass das Schraubelement (19) mit der Hülse (18) verschraubbar ist.
